# EUROPÄISCHE PATENTSCHRIFT

(11) **EP 1 053 129 B1**
(45) Veröffentlichungstag und Bekanntmachung des Hinweises auf die Patenterteilung: **16.02.2005**
(21) Anmeldenummer: 99957248.0
(22) Anmeldetag: 25.09.1999
(51) Int. Cl.: B60R 16/02

(54) **VERFAHREN UND VORRICHTUNG ZUR STEUERUNG VON ELEKTRISCHEN VERBRAUCHERN IN EINEM FAHRZEUG**
METHOD AND DEVICE FOR CONTROLLING ELECTRIC CONSUMERS IN A MOTOR VEHICLE
PROCEDE ET DISPOSITIF POUR COMMANDER DES CONSOMMATEURS ELECTRIQUES DANS UN VEHICULE

(30) Priorität: 15.12.1998 DE 19857916
(43) Veröffentlichungstag der Anmeldung: 22.11.2000
(73) Patentinhaber: ROBERT BOSCH GMBH, 70442 Stuttgart (DE)
(72) Erfinder: BERTRAM, Torsten, D-40547 Duesseldorf (DE); SCHMUCKER, Clemens, D-70806 Kornwestheim (DE); MAIER-LANDGREBE, Rolf, D-71394 Kernen (DE); BAUMANN, Torsten, D-74252 Massenbachhausen (DE)
(86) Internationale Anmeldenummer: PCT/DE1999/003100
(87) Internationale Veröffentlichungsnummer: WO 2000/035714

(56) Entgegenhaltungen:
- EP-A- 0 575 622
- DE-A- 19 709 318
- FR-A- 2 729 901

## Beschreibung

### Stand der Technik

Die Erfindung betrifft ein Verfahren und Vorrichtung zur Steuerung von elektrischen Vebrauchern in einem Fahrzeug.

Beispielsweise aus der DE-C 39 36 638 sind Verfahren und Vorrichtungen bekannt, bei denen abhängig von der Bordnetzspannung elektrische Verbraucher mit Blick auf die Ladebilanz der Batterie gruppenweise abgeschaltet werden. Dabei wird eine Gruppe immer komplett abgeschaltet. Die Gruppeneinteilung ist statisch, d.h. ein bestimmter Verbraucher gehört immer zur selben Gruppe. Ferner wird damit der umgekehrte Fall, daß elektrische Verbraucher z.B. aufgrund von Triebstranganforderungen zugeschaltet werden, nicht abgedeckt.

Es ist also erforderlich, eine Verbrauchersteuerung anzugeben, bei der das Zu- und Abschalten von elektrischen Verbrauchern über ein übergeordnetes Verbrauchermanagement im Rahmen einer Gesamtfahrzeugsteuerung, eines Bordnetz- oder eines Energiemanagements koordiniert wird.

Eine Gesamtfahrzeugsteuerung wird beispielsweise in der DE-A-41 11 023 (US-Patent 5,351,776) beschrieben, die eine hierarchische Auftragsstruktur für die Steueraufgaben aufweist. Die dort beschriebene Steuerungsstruktur umfaßt Koordinationselemente, welche einen aus einer höheren Hierarchieebene ausgehenden Befehl in Befehle für Elemente einer nachgeordneten Hierarchieebene umsetzen. Die Inhalte der von oben nach unten in der Hierarchiestruktur weitergegebenen Befehle stellen physikalische Größen dar, die die Schnittstellen zwischen den einzelnen Hierarchieebenen bestimmen. Die beschriebenen Schnittstellen orientieren sich dabei an den physikalischen Gegebenheiten der Fahrzeugbewegung, insbesondere des Antriebsstrangs und der Bremse. Eine darüber hinaus gehende Betrachtung einer Fahrzeugsteuerung unter Berücksichtigung der Verbrauchersteuerung oder der Energieverteilung im Bordnetz wird nicht beschrieben.

Aus der DE-A 1 97 09 317 ist das Prinzip einer hierarchischen Grundstruktur eines Fahrzeuggesamcsystems bekannt. Dort ist ein Fahrzeugkoordinator Auftraggeber für die Komponenten Antrieb (Quelle mechanischer Leistung), Fahrzeugbewegung, Karosserie und Innenraum und Elektrisches Bordnetz (Quelle elektrischer Leistung). Die Kommunikation zwischen den einzelnen Komponenten dieser Struktur erfolgt nur zwischen der übergeordneten Komponente und den dieser zugewiesenen Komponenten im Rahmen fest vorgegebener Kommunikationsbeziehungen. Diese sind der Auftrag, der grundsätzlich von einer Komponente in einer höheren an eine Komponente in einer niedrigeren Hierarchieebene gegeben wird und von der beauftragten Komponente erfüllt werden muß, die Anforderung, die auch von einer Komponente in einer niedrigeren an eine Komponente in einer höheren Hierarchieebene gegeben wird und die von der angeforderten Komponente erfüllt werden sollte, und die Abfrage, bei der von der gefragten Komponente eine Antwort an die fragenden Komponente erwartet wird. Im Rahmen dieser vorgegebenen Kommunikationsbeziehungen zwischen den Komponenten findet die Steuerung des Fahrzeugs statt. Es werden zur Steuerung des Fahrzeugs fest vorgegebene physikalische Größen übermittelt, die definierte Schnittstellen zwischen den einzelnen Komponenten darstellen. Eine Ausgestaltung des Koordinators Elektrisches Bordnetz oder Angabe zur Einbindung der Steuerung elektrischer Verbraucher wird nicht gezeigt. Vielmehr ist ein System zur Steuerung von elektrischen Verbrauchern in einem Fahrzeug gezeigt, wobei eine Steuerungsstruktur für die Verbraucher vorgesehen ist, die aus einem zentralen übergeordneten Fahrzeugkoordinator besteht, der den Ressourcenbedarf der Verbraucher und das Potential der bereitstellbaren elektrischen Leistung erhält und diese miteinander vergleicht und abhängig von dem Vergleichsergebnis die Ressource den Verbrauchern zuteilt. Eine konkrete Ausgestaltung dieses zentralen Koordinators ist nicht gezeigt. Das Verbrauchermanagement bezüglich Priorisierung, Leistungsanforderung und -erstellung ist dezentral auf die einzelnen Komponenten verteilt.

Aufgabe der Erfindung ist es die Ressourcenplanung und -vergabe im Hinblick auf den genannten Stand der Technik zu optimieren.

### Vorteile der Erfindung

Im Rahmen eines übergeordneten Bordnetz- oder Energiemanagements hat das Verbrauchermanagement die Aufgabe, die elektrische Verbraucherleistung anzufordern und die zugeteilte elektrische Leistung auf die einzelnen elektrischen Verbraucher zu verteilen. Durch das Vebrauchermanagement wird eine möglichst optimalen Koordination von Triebstrang, Leistungserzeugung, -speicherung und -verbrauch erreicht.

Durch die Einbindung des Vebrauchermanagements in eine hierarchische Gesamtfahrzeugstruktur wird eine größere Übersichtlichkeit des Gesamtsystems und des Verbrauchersteuersystems erreicht und eine modulare Entwicklung von Software ermöglicht.

Besonders vorteilhaft ist, daß die Struktur des Vebrauchermanagements besonders einfach ist. Die Schnittstellen zwischen den einzelnen Komponenten und die ausgetauschten Größen sind rein logischer Natur, d.h. hardware- und realisierungsunabhängig. Dadurch ergeben sich als Vorteile die Wiederverwendbarkeit von Software, eine leichte Erweiterbarkeit, eine gute Übersichtlichkeit und eine leichte Applizierbarkeit.

Vorteilhaft ist ferner, daß das Zusammenspiel von Generator, Spannungsregler, elektrischen Verbrauchern, Batterien und eventuell vorhandenen DC/DC-Wandlern koordiniert wird sowie gegebenenfalls eine Koordination mit dem Triebstrang bereitgestellt werden kann.

Das Verbrauchermanagement hat im Rahmen eines übergeordneten elektrischen Bordnetzmanagements die Aufgabe, elektrische Leistung anzufordern, zugeteilte elektrische Leistung zu verteilen und die Schaltzeitpunkte der Verbraucher zu koordinieren, um unzulässige Schaltspitzen (z.B. durch gleichzeitiges schalten von Verbrauchern mit Anlaufstrom (Elektromotoren, Lampen,...)) zu verhindern. Somit wird eine Koordination aller Verbraucher erreicht, die mit Blick auf Verbauch und Komfort je nach Anforderung optimiert ist.

Es ist vorteilhaft, die Leistungszuteilung durch Software getriggerte Stelleingriffe an den Verbrauchern zu realisieren. Dies kann das harte Zu- bzw. Abschalten von Verbrauchern sein oder z.B. eine Ansteuerung der elektrischen Verbraucher mittels Pulsweitenmodulation.

Für die Zuteilung der elektrischen Leistung und Koordination der Verbraucher sind Informationen über die Verbraucher notwendig. Deshalb sind allen elektrischen Verbrauchern Prioritäten zur Klassifizierung zugeteilt. Dabei sind wenigstens drei Prioritätsstufen zu unterscheiden (eine feinere Unterteilung ist denkbar): Höchste Priorität haben sicherheitsrelevante Verbraucher und Verbraucher, die nicht über Stellglieder beeinflußbar sind. Eingeschaltete Verbraucher mit höchster Priorität definieren die Grundlast, d.h. die minimal benötigte elektrische Leistung für den Fahrzeugbetrieb, die unter allen Umständen bereitzustellen ist. Diese Verbraucher sind zum Teil nicht über das Bordnetzmanagement steuerbar (Leistungszuteilung nicht über Bordnetzmanagement) sondern z.B. direkt verdrahtet. Ihre Leistungen sind in der Leistungsbilanz des Bordnetzmanagements jedoch zu berücksichtigen. Mittlere Priorität besitzen bedingt steuerbare Verbraucher, d.h. Verbraucher mit kleinen Zeitkonstanten wie z.B. Innenraumgebläse und Radio. Ein Steuereingriff ist dort durch den Benutzer schnell wahrnehmbar. Niedrigste Priorität haben die steuerbaren Verbraucher mit großen Zeitkonstanten wie z.B. Heizungen. Diese eignen sich für eine "komfortneutrale" Steuerung, da Eingriffe für den Benutzer nicht sofort spürbar werden. Die Prioritäten ändern sich dynamisch, je nach Zustand des Verbrauchers. So wechselt ein Verbraucher, der vom Verbrauchermanagement leistungsreduziert wurde in eine höhere Prioritätsstufe, sobald eine Funktionsänderung spürbar wird. In vorteilhafter Weise wird eine variable Steuerung der Verbraucher auf der Basis der vorgegebenen Prioritätenverteilung mittels des Verbrauchermanagements möglich.

### Zeichnung

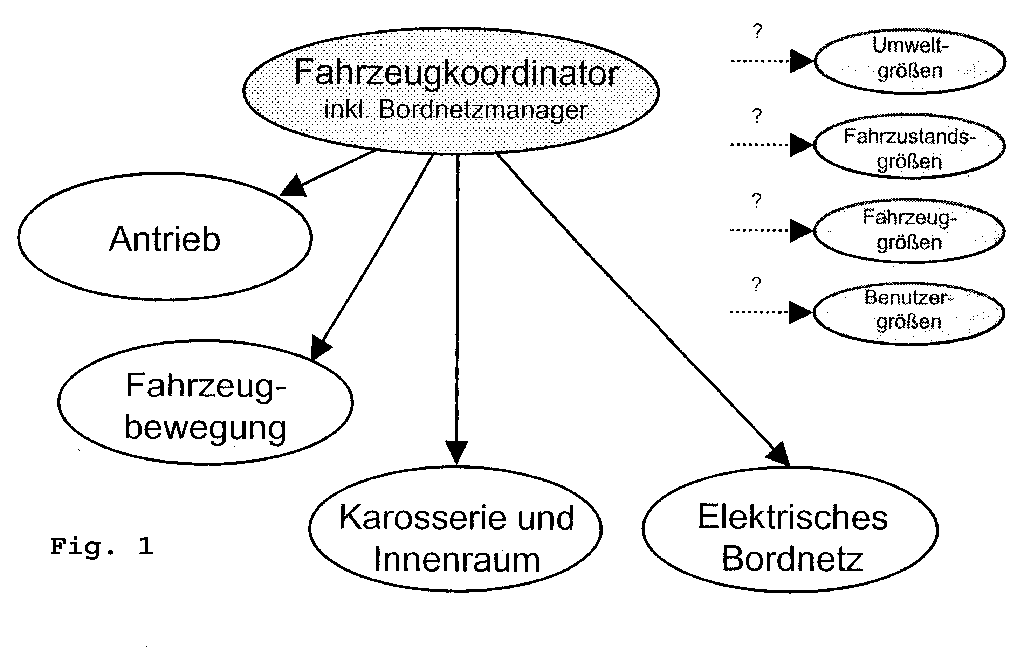

Ausführungsbeispiele der Erfindung sind in den Figuren 1 bis 5 dargestellt und werden in der nachfolgenden Beschreibung näher erläutert. Wird bei der Beschreibung der Ausführungsbeispiele von Leistung gesprochen, ist dabei in der Regel die elektrische Leistung zu verstehen.

### Beschreibung von Ausführungsbeispielen

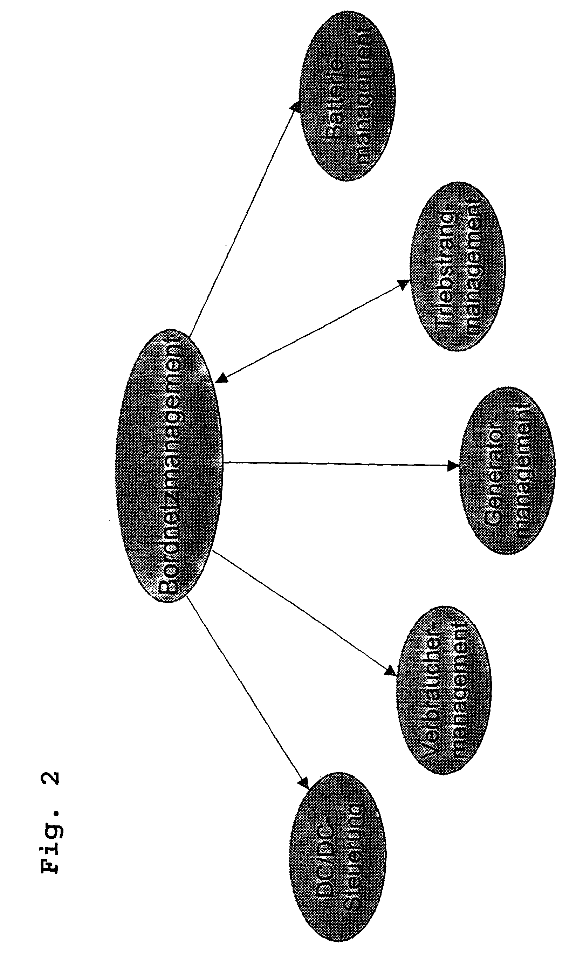

Die Struktur des Verbrauchermanagements hängt von der Struktur des gesamten Bordnetzmanagements ab. Im folgenden sind zwei Ausführungen beschrieben (vgl. Figuren 1 und 2).

Figur 1 zeigt ein erstes Ausführungsbeispiel einer Gesamtfahrzeugsteuerung. Diese ist im wesentlichen aus dem eingangs genannten Stand der Technik bekannt. Sie zeigt einen Gesamtfahrzeugkoordinator, der den Bordnetzmanager zur Steuerung der Energieerzeugung und -verteilung umfaßt und dem die Steuerkomponenten für den Antrieb, für die Fahrzeugbewegung, für die Karosserie und den Innenraum sowie für das elektrische Bordnetz zugeordnet sind. Zwischen dem Koordinator und den Komponenten bestehen die aus dem Stand der Technik bekannten Kommunikationsbeziehungen. Elektrische Verbraucher sind in allen Komponenten enthalten. Daher verteilt sich in diesem Ausführungsbeispiel das Verbrauchermanagement auf alle Komponenten inkl. dem Fahrzeugkoordinator.

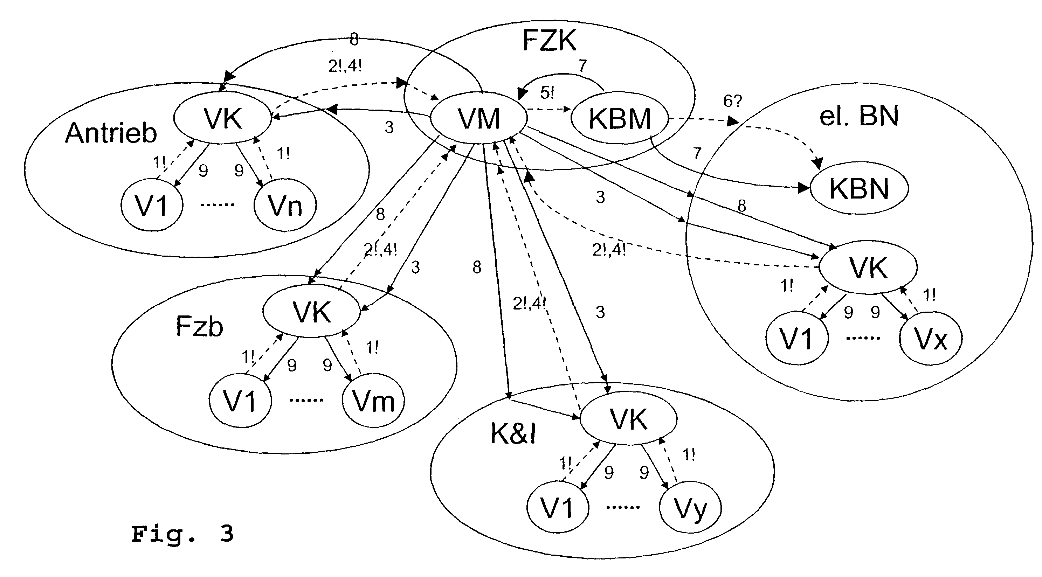

Im folgenden wird anhand von Figur 3 die Leistungsanforderung der Verbraucher beschrieben. Unter Nennleistung wird im folgenden die elektrische Leistung verstanden, die ein elektrischer Verbraucher im gewünschten eingeschwungenen Betriebszustand benötigt. Sie kann abhängig von der gewählten Stufe sein (z.B. Lüfter Stufe 1-3, gewünschte Wischergeschwindigkeit etc.).

Die einzelnen elektrischen Verbraucher (V1 bis Vn (z.B. el. Wasserpumpe, el. Motorkühlgebläse), V1 bis Vm (z.B. el. hydr. Bremse, el. Servolenkung), V1 bis Vy (z.B. Sitzheizung, Innenraumgbläse), V1 bis Vx (el. Verbaucher im Bordnetz sind z.Zt. nicht bekannt, wurden aber der Vollständigkeit halber vorgesehen) der Fahrzeug-Komponenten fordern elektrische Leistung beim Verbraucherkoordinator VK der jeweiligen Komponente an (symbolisiert durch die Kommunikationsbeziehung 1!). Diese Leistungsanforderung enthält für jede zur Verfügung stehende Bordnetzspannung, die Nennleistung des Verbrauchers, seine Mindestleistung, die für den Betrieb erforderlich ist (z.B. elektrische Leistung zur Überwindung der Haftreibung bei E-Motoren) und seine Spitzenleistung (z.B. Anlaufstrom) beim Schalten inkl. des dynamisches Verhaltens (Kennwerte). Diese drei Werte charakterisieren die im Fahrzeug installierten elektrischen Verbraucher und sind für jeden Vebraucher, z.B. als Tabelle, vorgegeben.

Der Verbraucherkoordinator VK legt nach einer vorgegebenen Zuordnung, die je nach Anwendungsfall veränderlich ist, Prioritäten der Verbraucher fest und summiert die Leistungsanforderungen abhängig von den Prioritäten auf. Die Spitzenleistungen werden zusätzlich klassifiziert, um ihre Zuteilung vom Fahrzeugkoordinator an die Komponenten zu vereinfachen. Bei der Zuteilung muß bekannt sein, wie sich die angeforderte Spitzenleistung zusammensetzt, ob z.B. die Leistungsanforderung von einem oder mehreren Verbraucher einer Komponente stammt und wie sich die Anforderung auf die einzelnen Verbraucher aufteilt. Die Klassifizierung ist möglich z.B. anhand der Differenzleistung ΔP (ΔP=Pₘₐₓ-Pₛₒₗₗ, mit Pₘₐₓ: Absolutwert der Leistungsspitze, P_{Soll}: geforderte Nennleistung). Die Anzahl und Breite der Klassen sind je nach Anwendungsfall und entsprechend den eingesetzten Verbrauchern festgelegt. Als zusätzliches Unterscheidungsmerkmal ist die Angabe der Anzahl der Spitzenleistungsverbraucher pro Klasse denkbar.

Für jede Priorität ergeben sich damit folgende Grössen: geforderte Summenleistung (Nennleistung und der Teil der Spitzenleistung mit Zeitkonstante größer als die Zykluszeit des Bordnetzmanagements), Summen-Spitzenleistung (Spitzenleistung mit einer Zeitkonstante kleiner als Bordnetzmanagement-Zykluszeit) und Mindestleistung, die die Komponente als kleinste Einheit verarbeiten kann (zugeteilte Leistung ist entweder Null oder größer gleich dieser Mindestleistung).

Die Verbraucherkoordinatoren VK (vgl. Figur 3) fordern vom Fahrzeugkoordinator die ermittelte Spitzenleistung an (Anforderungsbeziehung 21). Der Fahrzeugkoordinator summiert die Anforderungen der einzelnen Komponenten und bewertet die Spitzenleistungsanforderung hinsichtlich ihrer Realisierbarkeit. Ein Realisierungsbeispiel ist weiter unten angegeben. Der Fahrzeugkoordinator teilt die realisierbare Spitzenleistung den einzelnen Komponenten zu (Auftragsbeziehung 3). Die Komponenten berechnen abhängig von der zugeteilten Spitzenleistung die Nennleistung (siehe unten) und fordern diese zusammen mit der entsprechenden Mindestleistung beim Fahrzeugkoordinator an (Anforderungsbeziehung 4!). Der Fahrzeugkoordinator vergleicht die Anforderung mit dem Leistungsbereitstellungspotential des elektrischen Bordnetzes (dazu wird vom Verbrauchermanager VM die elektrische Summenleistung beim Bordnetzmanager KBM angefordert (Anforderungsbeziehung 5!). Dieser frägt beim Koordinator Bordnetz das Leistungspotential des Bordnetz ab (Abfragebeziehung 6?). Die elektrische Leistungsbereitstellung des Bordnetzes ist bestimmt durch die Leistungserzeugung durch den Generator, das Potential der Batterie(n) und bei Mehrspannungsbordnetzen zusätzlich durch die Auslegung der vorhandenen DC/DC-Wandler. Der Bordnetzmanager vergleicht dann Anforderung und Potential und bestimmt daraus die Zuteilung der elektrischen Leistung).
Der Bordnetzmanager gibt abhängig vom Vergleichsergebnis Aufträge zur Leistungserzeugung an das Bordnetz (Auftragsbeziehung 7!) und zur Leistungsabnahme an den Verbrauchermanager, der wiederum Aufträge entsprechend den einzelnen Anforderungen an die Fahrzeug-Komponenten (Auftragsbeziehungen 8) abgibt, dort an die Verbraucherkoordinatoren VK. Die Verbraucherkoordinatoren VK der einzelnen Komponenten vergeben dann die Aufträge zur Leistungsabnahme (9) an die einzelnen Verbaucher (z.B. Schalten der Vebraucher).

Im folgenden wird der Vergleich von Leistungsforderung mit Leistungsangebot näher beschrieben. Zunächst sei der Spitzenleistungsvergleich dargestellt. Eine angeforderte Spitzenleistung ist realisierbar, wenn die dadurch verursachte Spannungsänderung im el. Bordnetz innerhalb der spezifizierten Grenzen bleibt. Die Überprüfung ist möglich durch Vorgabe von Erfahrungswerten (Applikationsgrößen, z.B. Spitzenleistungsumme <1kW ist grundsätzlich zulässig) oder durch online Simulation der Auswirkung mit Hilfe eines Bordnetzmodells.

Ist die angeforderte Spitzenleistung realisierbar, teilt der Fahrzeugkoordinator den Komponenten die entsprechende Leistung zu (z.B. Einschalterlaubnis). Ist die Spitzenleistung nicht realisierbar, wird abhängig von der Priorität und der Einstellbarkeit der Spitzenleistung den einzelnen Fahrzeug-Komponenten eine maximal zulässige Spitzenleistung zugeteilt. Die Einstellbarkeit der zugeteilten Spitzenleistung in der Fahrzeugkomponente kann vom Fahrzeugkoordinator durch die erwähnte Klassifizierung (Einteilung der Spitzenleistungsforderungen in unterschiedliche Leistungsklassen) im voraus festgestellt werden. Da der Fahrzeugmanager die dynamischen Kenngrössen der Spitzenleistungsanforderung kennt, kann auch ein Spitzenleistungsverlauf vorgegeben werden, d.h. der Bordnetzmanager teilt einen zeitlichen Verlauf der Spitzenleistungszuschaltung zu für einen Rechenzyklus des Bordnetzmanagers. Voraussetzung ist, daß das Zeitintervall für das Zu- bzw. Abschalten von einzelnen Verbrauchern kürzer ist als das Zeitintervall für einen Zyklus des Bordnetzmanagements.

Der Nennleistungsvergleich wird wie folgt durchgeführt. Abhängig von der zugeteilten Spitzenleistung bestimmen die Vebraucherkoordinatoren der Komponenten die benötigte Nennleistung. Entspricht die zugeteilte Spitzenleistung der angeforderten Spitzenleistung, ist die anzufordernde Nennleistung gleich der von den einzelnen Verbrauchern angeforderten Summen-Nennleistung (aufsummierte Nennleistungsanforderung der zur Komponente gehörenden Verbraucher). Ist die zugeteilte Spitzenleistung geringer als die angeforderte Spitzenleistung, ist die Leistungsabnahme durch einzelne Verbraucher zeitlich so zu verzögern, daß die Schaltzeit frühestens ins nächste Berechnungsintervall des Verbrauchermanagers fällt. Der Verbraucherkoordinator der Komponente entscheidet über die Spitzenleistungszuteilung an die Verbraucher und rechnet die nicht berücksichtigten Verbraucher aus der Nennleistungsanforderung heraus. Diese neue Nennleistungssumme fordert der Verbraucherkoordinator beim Fahrzeugkoordinator an.

Kann das Bordnetz die geforderte Nennleistung liefern, beauftragt der Fahrzeugkoordinator das Bordnetz mit der Leistungsbereitstellung und beauftragt gleichzeitig die Komponenten, die gelieferte Leistung abzunehmen, d.h. die entsprechenden Verbraucher zu schalten. Die Verbraucherkoordinatoren der Komponenten beauftragen die Verbraucher mit der Abnahme der Leistung.

Ist die angeforderte Verbraucherleistung grösser als die zur Verfügung stehende Leistung, teilt der Fahrzeugkoordinator diese gemäß Prioritätenliste den Komponenten zu. Dabei ist die Mindestleistung pro Komponente zu berücksichtigen, d.h. die zugeteilte Leistung ist entweder Null oder größer gleich der Mindestleistung, die von der Komponente noch sinnvoll verwertbar ist. Der Auftragsfluß läuft dann analog zum vorigen Fall. Die Aufteilung der einer Komponente zugeteilten Leistung auf die einzelnen Verbraucher der Komponente findet im Verbraucherkoordinator VK der Komponente statt.

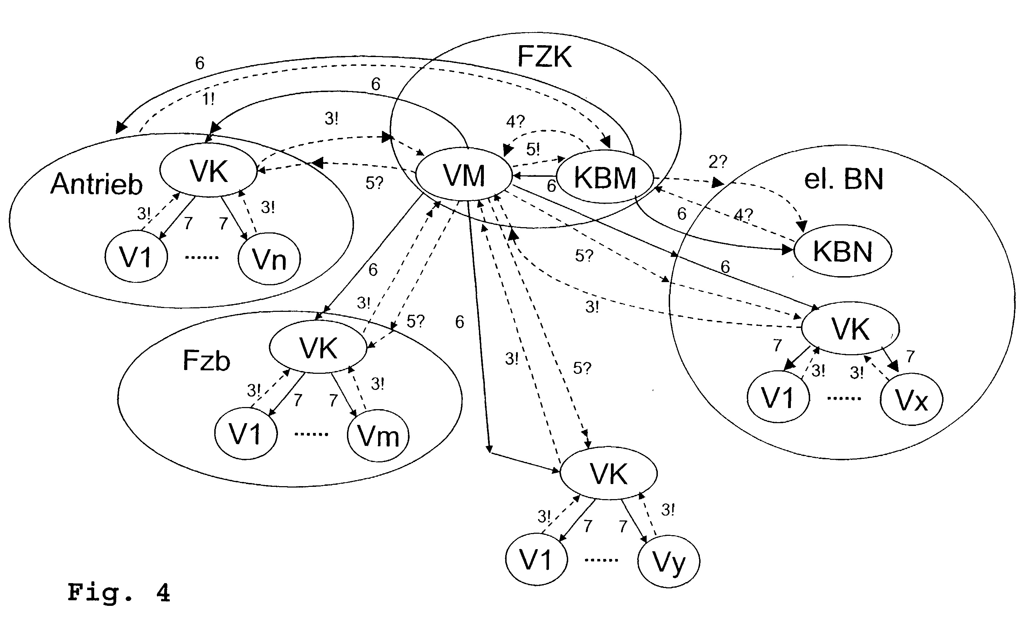

Der Kommunikationsablauf bei einem Überangebot an elektrischer Leistung ist in Figur 4 dargestellt. Zunächst wird das Überangebot festgestellt. Zu diesem Zweck übermittelt die Komponente Antrieb und/oder Fahrzeugbewegung an den Fahrzeugkoordinator, dort den Bordnetzmanager KBM, eine Anforderung bezüglich einer mechanischen Leistung (Anforderungsbeziehung 1! - im Bild ist aus Übersichtlichkeitsgründen nur die mech. Anforderung vom Antrieb dargestellt. Bei einer Anforderung von Fahrzeugbewegung läuft das Szenario analog), die z.B. durch den Generator der Komponente elektrisches Bordnetz realisiert werden soll (z.B. Anforderung einer höheren Antriebsbelastung zur Warmlaufunterstützung oder Anforderung ",Bremsenergierückgewinnung'). Der Bordnetzmanager KBM fragt über eine Abfragebeziehung 2? das mechanische Leistungspotential des Bordnetzes ab, d.h. wieviel mechanische Last der Generator im aktuellen Betriebspunkt aufnehmen kann (die mechanische Aufnahmeleistung ist gleich der elektrischen Abgabeleistung dividiert durch den Wirkungsgrad, d.h. die Abfrage ist gleichbedeutend mit der Abfrage nach dem elektrischen Leistungspotential, wenn der Wirkungsgrad bekannt ist, was hier vorausgesetzt wird. Der Wirkungsgrad kann z.B. als Kennfeld abgelegt sein eta=f(n,P,Temperatur)) . Über die Anforderungsbeziehungen 3! erhält der Fahrzeugkoordinator, dort der Verbrauchermanager, die von den Verbrauchern der einzelnen Komponenten über die zugeordneten Verbraucherkoordinatoren VK angeforderte elektrische Leistung. Ist diese kleiner als die aufgrund der geforderten mechanischen Leistung zur Verfügung stehende elektrische Leistung, stellt der Fahrzeugkoordinator (dort der Bordnetzmanager oder der Verbrauchermanager) ein elektrisches Leistungsüberangebot fest.

In diesem Fall wird durch den Bordnetzmanager im Fahrzeugkoordinator vom Verbrauchermanager über die Abfragebeziehung 4? das elektrische Leistungspotential der Verbraucher abgefragt. Der Verbrauchermanager seinerseits fragt über die Anfragebeziehung 5? von den einzelnen Komponenten, dort von den Verbraucherkoordinatoren, das elektrische Potenial der einzelnen Verbraucher ab. Das elektrische Potential entspricht dabei der Summe der verfügbaren Spitzen- bzw. Nennleistung (Das elektrische Potential gibt an, wieviel elektrische Leistung zusätzlich abgenommen werden kann durch Zuschalten oder Höherschalten von Verbrauchern unter Berücksichtigung einer maximal zulässigen Spitzenleistung). Diese elektrische Leistung wird dann vom Vebrauchermanager beim Bordnetzmanager angefordert (Anforderungsbeziehung 5!). Der Bordnetzmanager teilt die bei der Realisierung der mechanischen Anforderung zur Verfügung stehende elektrische Leistung entsprechend den Prioritäten zu, indem er Aufträge 6 über den Verbrauchermanager an die Verbraucherkoordinatoren zur Abnahme der Leistung und ans den Bordnetzkoordinator zur Erzeugung der elektrische Leistung abgibt. Die Verbraucherkoordinatoren der Komponenten beauftragen dann die einzelnen Verbraucher zur Abnahme der entsprechenden Leistungen (Auftrag 7).

Alternativ zu obigem Kommunikationsablauf besteht die Möglichkeit, Spitzen- und Nennleistung gemeinsam anzuforden, d.h. die Verbraucherkoordinatoren der einzelnen Fahrzeugkomponenten fordern in einem Schritt die drei charakteristischen Verbrauchergrößen (Nennleistung, Mindestleistung und Spitzenleistung) beim Fahrzeugkoordinator an. Der Fahrzeugkoordinator bewertet dann die Spitzenleistungsanforderung. Ist die Spitzenleistung realisierbar, wird die Nennleistungsanforderung bearbeitet. Ist die Spitzenleistung nicht realisierbar, wird den einzelnen Komponenten die realisierbare Leistung zugeteilt. Diese korrigieren ihre Nennleistungsanforderung, indem sie die aufgrund ihrer Spitzenleistungsanforderung nicht zugelassenen Verbraucher aus der Nennleistungsanforderung herausrechnen. Die korrigierte Nennleistung wird dann beim Fahrzeugkoordinator angefordert. Die Bewertung der Nennleistungsanforderung, die Zuteilung etc. läuft dann analog zu den angeführten Szenarien ab.

In Figur 2 ist ein weiteres Ausführungsbeispiel für ein Verbrauchermanagement dargestellt. Bei dieser Struktur wird nicht das Gesamtfahrzeug betrachtet sondern nur der bordnetzrelevante Teil des Fahrzeugs. Der Bordnetzmanager hat oder bekommt Kenntnis über die Anforderungen der Leistungserzeugung (Kommunikation mit dem Generatormanagement), die Anforderungen der Speicher (Kommunikation mit dem Batteriemanagement), die Anforderungen des Triebstrangs, die Anforderung der DC/DC-Wandler bei Mehrspannungsbordnetzen und die Anforderungen der elektrischen Verbraucher wie unten beschrieben. Die einzelnen Anforderungen werden bewertet und das Bordnetzmanagement legt anhand der Prioritäten eine übergeordnete Strategie fest, mit dem Ziel, die Leistungserzeugung, -speicherung, -verbrauch und den Fahrzeugantrieb möglichst optimal zu koordinieren. D.h. es legt fest, welche Anforderungen in welchem Umfang erfüllt werden. Für diese Entscheidung benötigt der Bordnetzmanager zusätzlich Informationen über das Potential der einzelnen Komponenten (Triebstrang, Generator, Batterie, elektrische Verbraucher und DC/DC-Wandler). Diese Potentiale werden bei Bedarf vom Bordnetzmanager abgefragt.

Alle elektrischen Verbraucher inklusive Ansteuerung sind in einem Block, dem Verbrauchermanagement, zusammengefaßt und nicht mehr auf verschiedene Strukturblöcke verteilt. Die Funktionalität ist identisch mit der Funktionalität des Verbrauchermanagements im ersten Ausführungsbeispiel: Die Verbraucher fordern elektrische Leistung beim Koordinator des Verbrauchermanagements an. Die Leistungsanforderung enthält ebenfalls die Komponenten Nennleistung, Mindestleistung, die für den Betrieb erforderlich ist (z.B. Leistung zur Überwindung der Haftreibung bei E-Motoren) und Spitzenleistung (z.B. Anlaufstrom) beim Schalten (inkl. des dynamisches Verhaltens (Kennwerte)). Ebenso ist zusätzlich die Angabe des Spannungsniveaus des Verbrauchers erforderlich (z.B. 12V oder 42V-Verbraucher).

Ein Realisierungsbeispiel für die Werte der Leistungsanforderung ist z.B. eine in einem Steuergerät abgelegte Tabelle mit allen im Fahrzeug verfügbaren elektrischen Verbrauchern. Diese Tabelle enthält für jeden Verbraucher die Nennleistung, die benötigte Mindestleistung, die Spitzenleistung beim Schalten inkl. dynamischer Kennwerte und die Bordnetznennspannung an die der Verbraucher angeschlossen ist (z.B. 12V oder 42V). Bei Verbrauchern, die in Stufen schaltbar sind (z.B. Innenraumgebläse) wird jede Stufe als einzelner Verbraucher bewertet. Wird ein Verbraucher angefordert z.B. durch Betätigung eines Schalters, werden die Werte für das Verbrauchermanagement aus dieser Tabelle ausgelesen. Diese Leistungsanforderungen werden priorisiert. Die Priorität hängt dabei von der Art des Verbrauchers und dessen Vorgeschichte ab.

Danach werden die Spitzenleistungsanforderungen aufsummiert, nach Prioritäten und Spannungsniveau getrennt. Diese Spitzenleistungssumme fordert der Koordinator des Verbrauchermanagements beim Bordnetzmanagement an. Das Bordnetzmanagement bewertet die Spitzenleistungsanforderung (z.B. durch online-Simulation anhand eines Bordnetzmodells oder durch Auswertung von Erfahrungswerten) und teilt dem Verbrauchermanagement die zulässige Spitzenleistung, getrennt nach Spannungsniveau, zu.

Das Verbrauchermanagement teilt die zugeteilte Spitzenleistung auf die anfordernden Verbraucher auf. Ist die zulässige Spitzenleistung kleiner als die angeforderte Spitzenleistung, erfolgt keine Zuteilung an die Spitzenleistung anfordernden elektrischen Verbraucher mit der niedrigsten Priorität.

Im nächsten Schritt wird die Summe der Nennleistungsanforderungen gebildet. Dies ist die Summe der elektrischen Verbraucher, die Leistung anfordern, aber keine Spitzenleistungsanforderung haben und gleichzeitig die Nennleistung der Verbraucher, die bei der Spitzenleistungszuteilung berücksichtigt wurden. Diese Nennleistungssumme fordert das Verbrauchermanagement beim Bordnetzmanagement an.

Abhängig von der übergeordneten Strategie teilt das Bordnetzmanagement dem Verbrauchermanagement die zu verbrauchende elektrische Leistung zu (jeweils nach Spannungsniveaus getrennt). Ergibt sich, daß zur Erfüllung der Anforderungen mehr elektrische Leistung erzeugt werden muß als von den Verbrauchern und der Batterie angefordert wurde (z.B. Anforderung des Triebstrangs nach erhöhter Belastung durch den Generator), muß das Potential der elektrischen Verbraucher abgefragt werden. Das heißt das Bordnetzmanagement fragt das Verbrauchermanagement, wieviel elektrische Leistung zusätzlich abgenommen werden kann durch Zuschalten oder Höherschalten von Verbrauchern unter Berücksichtigung einer maximal zulässigen Spitzenleistung. Die Antwort auf diese Abfrage enthält die zusätzliche elektrische Leistung aufgeteilt nach Prioritäten und nach Spannungsniveau (z.B. 12V, 42V). Die Prioritäten müssen nicht identisch sein mit den Prioritäten der Leistungsanforderung der Verbraucher. Mit dieser Information ist das Bordnetzmanagement in der Lage, die Erfüllung der Anforderung zu bewerten und die elektrische Leistung dem Verbrauchermanagement zuzuteilen.

Ist die zugeteilte Leistung kleiner gleich der angeforderte Nennleistung, teilt der Koordinator des Verbrauchermanagements die vorhandene Leistung auf die anfordernden Verbraucher mit den höchsten Prioritäten auf. Anfordernde Verbraucher mit niedrigen Prioritäten erhalten keine oder eine reduzierte Zuteilung falls die zur Verfügung stehende Leistung nicht ausreicht für alle Verbraucher. D.h. diese Verbraucher werden nicht eingeschaltet oder arbeiten im reduzierte Betrieb, wenn dies durch geeignete Stellglieder möglich ist.

Ist die zu verbrauchende elektrische Leistung größer als die angeforderte Nennleistung, schaltet das Verbrauchermanagement die Verbraucher mit der niedrigsten vorhandenen Priorität zu, d.h. Verbraucher, deren Zuschaltung vom Fahrzeugnutzer möglichst nicht realisiert werden (z.B. die Heckscheibenheizung), bis die zugeteilte Leistung verbraucht ist. Als Randbedingung gilt dabei, daß die zulässige maximale Spitzenleistung nicht überschritten werden darf.

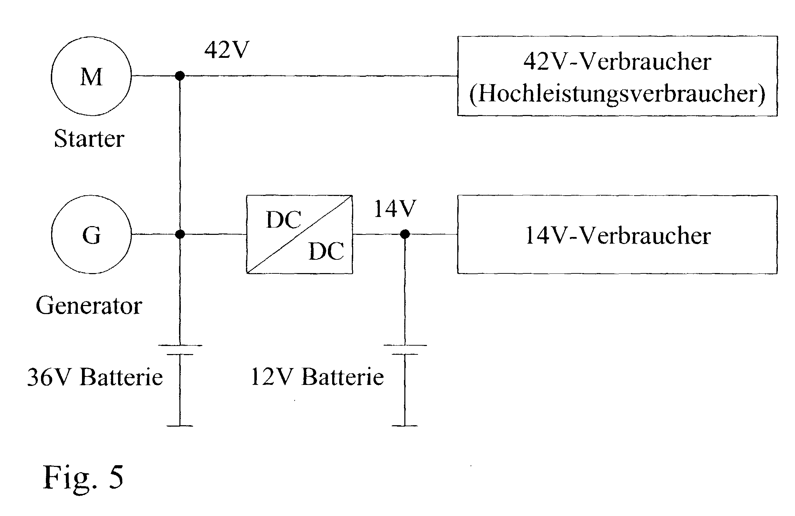

Figur 5 zeigt die Struktur eines Zwei-Spannungs-Bordnetzes. Beispielhaft sind hier die Spannungen 14V bzw. 42V angegeben. Die Hochspannungsbatterie hat die Aufgabe, die Startleistung zu liefern. Für den Fall, daß der Ladezustand dieser Batterie nicht ausreicht, um einen Fahrzeugstart zu ermöglich, erlaubt der bidirektionale DC/DC-Wandler das Nachladen dieser Batterie von der Niederspannungsseite. Das Bordnetzmanagement gibt in diesem Fall die Ladespannung der Hochspannungsbatterie als Ausgangsspannung für den DC/DC-Wandler vor. Da der Wandler strombegrenzt ist, kann die Ladespannung nur gehalten werden, wenn die Leistungsfähigkeit des Wandlers groß genug ist. Dies ist in der Regel nicht der Fall. D.h. die Ausgangsspannung des Wandlers liegt unter der Sollausgangsspannung, aber noch über der aktuellen Batteriespannung, d.h. der gesamte durch den Wandler übertragene Strom fließt in die Batterie. Voraussetzung ist allerdings, daß keine elektrischen Verbraucher auf der Hochspannungsseite während der Ladephase eingeschaltet sind. D.h. das Verbrauchermanagement muß dafür sorgen, daß alle Verbraucher auf der Hochspannungsseite abgeschaltet werden, zumindest aber so viele, daß die an der Batterie anliegende Spannung für eine ausreichend schnelle Ladung ausreicht.

## Patentansprüche

1. Verfahren zur Steuerung von elektrischen Verbrauchern in einem Fahrzeug, wobei eine Steuerungsstruktur für die Verbraucher vorgesehen ist, die aus einem zentralen übergeordneten Verbrauchermanagement (VM) besteht, das von den Verbrauchern einzeln oder als Summen zusammengefaßt Anforderungen bezüglich der Verbraucherleistung (2!, 4!) empfängt, die Steuerungsstruktur ferner einen zentralen übergeordneten Bordnetzmanager (KBM) enthält, sowie einen Koordinator für das elektrische Bordnetz (KBN) und dessen Leistungserzeugung und Leistungsbereitstellung aufweist, wobei der Bordnetzmanager (KBM) vom Verbrauchermanagement (VM) die Summe der angeforderten elektrischen Verbraucherleistung erhält und mit der erzeugten und bereitgestellten elektrischen Leistung (6?) im Bordnetz vergleicht und abhängig von dem Vergleichsergebnis Aufträge zur Leistungserzeugung (7!) an den Koordinator elektrisches Bordnetz (KBN) und/oder Aufträge zur Leistungsabnahme (7!) an den Verbrauchermanager (VM) abgibt, wobei der Koordinator des elektrischen Bordnetzes (KBN) durch Aufträge an Bordnetzkomponenten die angeforderte elektrische Leistung einstellt und das Verbrauchermanagement (VM) die gesamte von den Bordnetzkomponenten erzeugte und bereitgestellte elektrische Leistung durch Steuern der Verbraucher (8) abnimmt.

2. Verfahren nach Anspruch 1, **dadurch gekennzeichnet, daß** die Verbraucher vom Verbrauchermanagement (VM) die elektrische Leistung als Spitzenleistung (2!), Nennleistung und Mindestleistung (4!), die für einen sinnvollen Betrieb des Verbrauchers erforderlich ist, anfordert.

3. Verfahren nach einem der vorhergehenden Ansprüche, **dadurch gekennzeichnet, daß** Gruppen von Verbrauchern zusammengefaßt sind und jeweils einem Verbraucherkoordinator (VK) zugeordnet sind, der die einzelnen Anforderungen der Verbraucher zusammenfaßt und an das Verbrauchermanagement (VM) abgibt.

4. Verfahren nach Anspruch 3, **dadurch gekennzeichnet, daß** die Verbraucherkoordinatoren (VK) jeweils die Summen der angeforderten Leistungen bilden und die Prioritäten der Verbraucher gemäß einer Vorgabe festlegen.

5. Verfahren nach Anspruch 3 oder 4, **dadurch gekennzeichnet, daß** die Verbraucherkoordinatoren (VK) an die zugeordneten Verbrauchern die vom Verbrauchermanagement (VM) zugeteilte elektrische Leistung durch Steuerung der Verbraucher zuteilen.

6. Verfahren nach einem der vorhergehenden Ansprüche, **dadurch gekennzeichnet, daß** bei einem Überangebot an elektrischer Leistung das Verbrauchermanagement (VM) die elektrische Leistung an die Korrdinatoren zuteilt, um das Überangebeot zu vernichten.

7. Verfahren nach einem der vorhergehenden Ansprüche, **dadurch gekennzeichnet, daß** das Verbrauchermanagement (VM) getrennte Anforderungen nach Spitzenleistung (2!) und Nennleistung (4!) empfängt, die Spitzenleistung summiert und deren Realisierbarkeit feststellt.

8. Verfahren nach einem der vorhergehenden Ansprüche, **dadurch gekennzeichnet, daß** bei nicht realisierbarer Spitzenleistungsanforderung die Leistung an Verbraucher höherer Priorität zugeteilt wird und die Nennleistungsanforderung entspechend korrigiert wird.

9. Verfahren nach einem der vorhergehenden Ansprüche, **dadurch gekennzeichnet, daß** das Verbrauchermanagement (VM) als Komponente einem Bordnetzmanagement (KBM) untergeordnet ist, wobei das Bordnetzmanagement (KBM) Generator, Batterie, Triebsctang und das Verbrauchermanagement (VM) bezüglich der Erzeugung und der Verteilung elektrischer Leistung koordiniert.

10. Vorrichtung zur Steuerung von elektrischen Verbrauchern in einem Fahrzeug, mit einer Steuerungsstruktur für die Verbraucher, die aus einem zentralen übergeordneten Verbrauchermanagement (VM) besteht, das von den Verbrauchern einzeln oder als Summen zusammengefaßt Anforderungen bezüglich der Verbraucherleistung (2!, 4!) empfängt, die Steuerungsstruktur ferner einen zentralen übergeordneten Bordnetzmanager (KBM) enthält, sowie einen Koordinator für das elektrische Bordnetz (KBN) und dessen Leistungserzeugung und Leistungsbereitstellung aufweist, wobei der Bordnetzmanager (KBM) vom Verbrauchermanagement (VM) die Summe der angeforderten elektrischen Verbraucherleistung erhält und mit der erzeugten und bereitgestellten elektrischen Leistung (6?) im Bordnetz vergleicht und abhängig von dem Vergleichsergebnis Aufträge zur Leistungserzeugung (7!) an den Koordinator elektrisches Bordnetz (KBN) und/oder Aufträge zur Leistungsabnahme (7!) an den Verbrauchermanager (VM) abgibt, wobei der Koordinator des elektrischen Bordnetzes (KBN) durch Aufträge an Bordnetzkomponenten die angeforderte elektrische Leistung einstellt und das Verbrauchermanagement (VM) die gesamte von den Bordnetzkomponenten erzeugte und bereitgestellte elektrische Leistung durch Steuern der Verbraucher (8) abnimmt.

## Claims

1. Method for controlling electrical loads in a vehicle, a control structure being provided for the loads which consists of a central superordinate load management system (VM) which receives from the loads requests relating to the load power (2!, 4!) individually or combined as sums, the control structure also containing a central superordinate on-board electrical system manager (KBM), and also having a coordinator for the on-board electrical system (KBN) and its power generation and power provision, the on-board electrical system manager (KBM) receiving the sum of the requested electrical load power from the load management system (VM) and comparing it with the electrical power (6?) generated and provided in the on-board electrical system, and, depending on the result of the comparison, outputting instructions to the coordinator of the on-board electrical system (KBN) to generate power (7!) and/or outputting instructions to the load manager (VM) to reduce power (7!), the coordinator of the on-board electrical system (KBN) setting the requested electrical power using instructions to components of the on-board electrical system, and the load management system (VM) reducing the total electrical power generated and provided by the components of the on-board electrical system by controlling the loads (8).

2. Method according to Claim 1, **characterized in that** the loads request the electrical power from the load management system (VM) in the form of peak power (2!), rated power and minimum power (4!) which is required for appropriate operation of the load.

3. Method according to either of the preceding claims, **characterized in that** groups of loads are combined, and each group has an associated load coordinator (VK) which combines the individual requests of the loads and outputs them to the load management system (VM).

4. Method according to Claim 3, **characterized in that** the load coordinators (VK) each form the sums of the requested powers and define the priorities of the loads in accordance with a prespecification.

5. Method according to Claim 3 or 4, **characterized in that** the load coordinators (VK) allocate the electrical power, allocated by the load management system (VM), to the associated loads by controlling the loads.

6. Method according to one of the preceding claims, **characterized in that** when excess electrical power is supplied, the load management system (VM) allocates the electrical power to the coordinators in order to eliminate the excess supply.

7. Method according to one of the preceding claims, **characterized in that** the load management system (VM) receives separate requests for peak power (2!) and rated power (4!), and sums the peak power and determines its feasibility.

8. Method according to one of the preceding claims, **characterized in that** when the request for peak power is not feasible, the power is allocated to loads with a higher priority and the request for rated power is correspondingly corrected.

9. Method according to one of the preceding claims, **characterized in that** the load management system (VM), as a component, is subordinate to a management system for the on-board electrical system (KBM), the management system for the on-board electrical system (KBM) coordinating the generator, battery, drive train and the load management system (VM) in terms of the generation and the distribution of electrical power.

10. Apparatus for controlling electrical loads in a vehicle, having a control structure for the loads which consists of a central superordinate load management system (VM) which receives from the loads requests relating to the load power (2!, 4!) individually or combined as sums, the control structure also containing a central superordinate on-board electrical system manager (KBM), and also having a coordinator for the on-board electrical system (KBN) and its power generation and power provision, the on-board electrical system manager (KBM) receiving the sum of the requested electrical load power from the load management system (VM) and comparing it with the electrical power (6?) generated and provided in the on-board electrical system, and, depending on the result of the comparison, outputting instructions to the coordinator of the on-board electrical system (KBN) to generate power (7!) and/or outputting instructions to the load manager (VM) to reduce power (7!), the coordinator of the on-board electrical system (KBN) setting the requested electrical power using instructions to components of the on-board electrical system, and the load management system (VM) reducing the total electrical power generated and provided by the components of the on-board electrical system by controlling the loads (8).

## Revendications

1. Procédé pour commander des consommateurs électriques dans un véhicule, selon lequel on prévoit pour les consommateurs une structure de commande composée d'un contrôle superviseur des consommateurs (VM) central qui reçoit, soit individuellement des consommateurs soit conjointement sous forme de somme, des demandes au sujet de la puissance des consommateurs (2 !, 4 !), la structure de commande contient en outre un contrôleur superviseur du réseau de bord (KBM) central et présente un coordinateur pour le réseau de bord électrique (KBN), pour sa production de puissance ainsi que pour sa distribution de puissance, le contrôleur du réseau de bord (KBM) obtient du contrôle des consommateurs (VM) la somme de la puissance que demandent les consommateurs électriques et il la compare à la puissance (6 ?) électrique produite et fournie dans le réseau de bord et, en fonction du résultat de la comparaison, il émet des ordres de produire la puissance (7 !) destinés au coordinateur du réseau de bord électrique (KBN) et/ou des ordres de diminuer la puissance (7 !) destinés au contrôle des consommateurs (VM) ; le coordinateur du réseau de bord électrique (KBN) règle la puissance électrique demandée par des ordres donnés aux composants du réseau de bord et, en commandant les consommateurs (8), le contrôle des consommateurs (VM) diminue la puissance électrique totale fournie et produite par les composants du réseau de bord.

2. Procédé selon la revendication 1,
**caractérisé en ce que**
le consommateur demande au contrôle des consommateurs (VM) la puissance électrique sous forme de puissance maximale (2 !), de puissance nominale et de puissance minimale (4 !) qui est nécessaire pour faire fonctionner correctement le consommateur.

3. Procédé selon l'une des revendications précédentes,
**caractérisé en ce que**
des groupes de consommateurs sont rassemblés et sont à chaque fois associés à un coordinateur de consommateurs (VK) qui rassemble les différents ordres des consommateurs et les envoie au contrôle des consommateurs (VM).

4. Procédé selon la revendication 3,
**caractérisé en ce que**
chacun des coordinateurs de consommateurs (VK) forme les sommes des puissances demandées et détermine les priorités des consommateurs en fonction d'une spécification.

5. Procédé selon la revendication 3 ou 4,
**caractérisé en ce que**
les coordinateurs de consommateurs (VK) attribuent aux consommateurs associés la puissance électrique attribuée par le contrôle des consommateurs (VM) en commandant les consommateurs.

6. Procédé selon l'une des revendications précédentes,
**caractérisé en ce que**
lorsque la puissance électrique est offerte en excès le contrôle des consommateurs (VM) attribue la puissance électrique aux coordinateurs afin de supprimer l'excédent d'offre.

7. Procédé selon l'une des revendications précédentes,
**caractérisé en ce que**
le contrôle des consommateurs (VM) reçoit des ordres distincts d'après la puissance maximale (2 !) et la puissance nominale (4 !), additionne la puissance maximale et détermine s'ils peuvent être exécutés.

8. Procédé selon l'une des revendications précédentes,
**caractérisé en ce que**
lorsque l'ordre de puissance maximale n'est pas réalisable la puissance est attribuée à des consommateurs à priorité assez élevée et l'ordre de puissance nominale est corrigé en conséquence.

9. Procédé selon l'une des revendications précédentes,
**caractérisé en ce que**
le contrôle des consommateurs (VM) est soumis en tant que composant à un contrôleur du réseau de bord (KBM) ; le contrôleur du réseau de bord (KBM) coordonne le générateur, la batterie, la ligne de commande et le contrôle des consommateurs (VM) pour ce qui est de produire et de distribuer la puissance électrique.

10. Dispositif pour commander des consommateurs électriques dans un véhicule, comportant pour les consommateurs une structure de commande composée d'un contrôle superviseur des consommateurs (VM) central qui reçoit, soit individuellement des consommateurs soit conjointement sous forme de somme, des demandes au sujet de la puissance des consommateurs (2 !, 4 !) ; la structure de commande contient en outre un contrôleur superviseur du réseau de bord (KBM) central et un coordinateur pour le réseau de bord électrique (KBN), pour sa production de puissance ainsi que pour fournir sa distribution de puissance; le contrôleur du réseau de bord (KBM) obtient du contrôle des consommateurs (VM) la somme de la puissance que demandent les consommateurs électriques et il la compare à la puissance (6 ?) électrique produite et fournie dans le réseau de bord et, en fonction du résultat de la comparaison, il émet des ordres de produire la puissance (7 1) destinés au coordinateur du réseau de bord électrique (KBN) et/ou des ordres de diminuer la puissance (7 !) destinés au contrôle des consommateurs (VM) ; le coordinateur du réseau de bord électrique (KBN) règle la puissance électrique demandée par des ordres donnés aux composants du réseau de bord et, en commandant les consommateurs (8), le contrôle des consommateurs (VM) diminue la puissance électrique totale produite et fournie par les composants du réseau de bord.
